# EUROPEAN PATENT SPECIFICATION

(11) **EP 2 242 673 B1**
(45) Date of publication and mention of the grant of the patent: **14.03.2012**
(21) Application number: 09700106.9
(22) Date of filing: 02.01.2009
(51) Int. Cl.: B60T 17/08

(54) **INTERNAL VENTILATING DIAPHRAGM PISTON BRAKE ACTUATOR**
MEMBRANKOLBENBREMSBETÄTIGER MIT INTERNER BELÜFTUNG
ACTIONNEUR DE FREIN À PISTON À DIAPHRAGME ET À VENTILATION INTERNE

(30) Priority: 02.01.2008 TR 200800007
(43) Date of publication of application: 27.10.2010
(73) Proprietor: Arfesan Arkan Fren Elemanlari Sanayi Ve Ticaret A.S., 41480 Kocaeli (TR)
(72) Inventor: AKIN, Ahmet, 41480 Kocaeli (TR); BATTAL, Yavuz, 41480 Kocaeli (TR); TENGERLI, Cuneyt, 41480 Kocaeli (TR)
(74) Representative: Berkkam, Ayfer
(86) International application number: PCT/TR2009/000001
(87) International publication number: WO 2009/085024

(56) References cited:
- EP-A- 0 554 050
- WO-A-03/080417

## Description

This invention is related to diaphragm - piston spring brake actuators which are used in heavy vehicles such as trucks, busses and trailers. This invention is developed with an aim to internal ventilation system that is used in diaphragm piston type spring brake actuators that are the subject of Patent Application No. TR 2002 00761 U and PCT Application No. WO 03/080417. The internal ventilation system briefly refers to a system that eliminates the factors such as dust, dirt and moisture which may affect the operation of the actuator from the back part of the piston by isolating the mentioned part from the outer environment.

Spring brake actuator consist of the service chamber that is activated during normal driving conditions; and park chamber which is turned to be activated in case of an air leakage or deliberate release of the air (pulling the handbrake). When it is requested to slow down or stop the vehicle, the service chamber is activated whereas the parking chamber is used when the vehicle is fixed.

### PRIOR ART

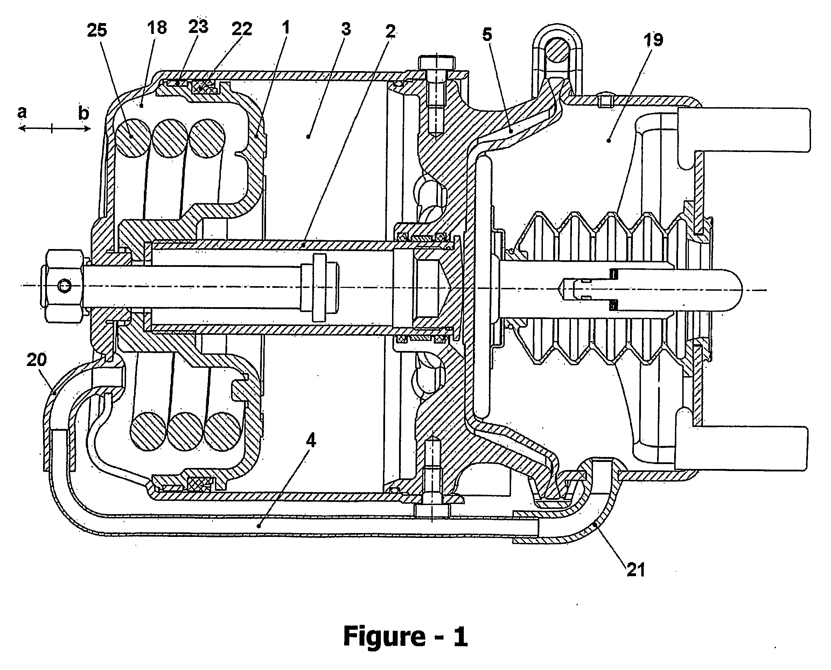

In the traditional diaphragm - piston spring brake actuators produced by the known technique, an external connection called as breather tube (4) is used for transferring the compressed and expanded air at the back part of the piston during the forward and backward motion of the piston (1) in the (a) and (b) directions and thereby decreasing the effect of the mentioned air (Figure 1).

The breather tube (4) in the traditional diaphragm - piston spring brake actuators produced by the known technique is attached to the housings by means of the rubber connection components which are named as rubber elbow (20 and 21). During the motion of the piston (1) in (b) direction, the air is absorbed into the back part (18) of the piston from the atmospheric area (19) by means of the breather tube (4). Atmospheric area is opened to the external environment through the ventilation hole. In addition to the air, dust and moisture could easily enter through the said ventilation hole. Dust and moisture is carried to the back part of the piston via the breather tube (4) by the movement of the piston (1) in (b) direction. Particularly moisture results in corrosion on the emergency spring (25); and dust damages the pneumatic sealing elements (22) and the sliding ring (23) over time.

Moreover, rubber elbows (20, 21) are damaged by the atmospheric conditions in time; and these connections would loosen. Simultaneously, it is frequently encountered that any end of the breather tube (4) open to the atmosphere as a result of any possible damages on the said connection by means of the vibration or the splashing stones from the road. In case that the said connections are damaged, water and mud would break into the back part (18) of the piston and cause the corrosion of the sliding ring (23) and the sealing member (22); and failure in the sealing. In addition, intrusive water and corrosive materials may cause damage to the emergency spring (25) that is responsible for holding the vehicle at parking condition. In this case, it would require the urgent necessity for the repair or replace of the spring brake actuator having a vital importance.

Internal ventilation systems were designed to operate the diaphragm piston spring brake actuators without being affected by the above mentioned factors. Internal ventilation systems isolate the parking chamber of the actuators completely from the atmosphere and entrance of the contaminant materials into the back part of the piston (1) is avoided. The back part (18) of the piston is ventilated by means of the dry air existing in the air system of the vehicle. Therefore, this system eliminates the possibility of any breakdown in the actuator due to the external contaminants or humid air.

In the Patent Application No. TR 2002 00761 U and PCT Application No. WO 03/080417 A1, it is disclosed an internal ventilation system that is developed by our firm for the diaphragm piston spring brake actuators. Figure 2 demonstrates a spring brake actuator wherein the internal ventilation system is applied; and Figure 3 and 4 depict the cross section of the mechanisms belonging to the internal ventilation system.

Internal ventilation system operates briefly as follows: By insufflating the air into the park chamber (3), the said park chamber (3) is filled with the pressurized air received from the air tanks of the vehicle. In this case, steel ball (9) of the piston valve (6) compresses the spring (7) by the effect of the pressure and fits on the O-Ring (8). Thus, the piston valve (6) is shut and sealing is ensured. Due to the pressure created in the park chamber (3), the piston (1) moves in (a) direction; and compresses the air at the back part (18) of the piston. Compressed air passes through the air transition aperture (24) and reaches at the plug (13). Air enters into the plug (13) through the air inlet openings (14); and arrives at the outlet channel (16) by opening the pneumatic sealing (15). Compressed air enables the o-ring (17) being opened; and releases into the service chamber (5). Meanwhile, compressed air is also released to the atmosphere as the service chamber (5) is open to the atmosphere over various valves differing from system to system.

By the release of the air in the park chamber (3) when the vehicle switches into the parking condition; the piston (1) moves in (b) direction by the force created by the emergency spring (25); and results in a partial vacuum at the back part (18) of the piston (1). The said vacuum is opened to the atmosphere by means of a piston valve (6). In other words, the pressure which is effective on the ball (9) rapidly decreases towards the atmospheric pressure by the release of the air inside the park chamber (3). Simultaneously, the ball (9) leaves from the o-ring (8) situated on its top through its motion exerted by the force supported by the compressed spring (7). Area of the back part (18) of the piston reaches atmospheric pressure through absorbed air from air transition space (12) with this motion.

### OBJECTIVES FOR THE DEVELOPMENT OF THE INVENTION

The internal ventilation system developed by this invention aims;
- To prevent the penetration of the factors such as dust, dirt, stone and moisture which would affect the operation of the actuator into the back part (18) of the piston;
- To isolate the back part (18) of the piston completely from the external environment;
- To prevent the corrosion of the emergency spring (25);
- To prevent the corrosion of the sealing member (22) and the sliding ring (23);
- To arrange the dosing pressure of the piston valve (6) at a more compatible level;
- To increase the safety by using a sealing member (29) with a larger section on the plug (13)

### DESCRIPTION OF THE FIGURES

The description of the figures which are prepared in order to better explain the Internally ventilated diaphragm - piston spring brake actuators which has been developed with this invention and of the brake actuators which have been developed by the traditional techniques, are given below.
- Figure 1 -: Cross sectional view of the diaphragm - piston spring brake actuator with external breather tube produced In the prior art

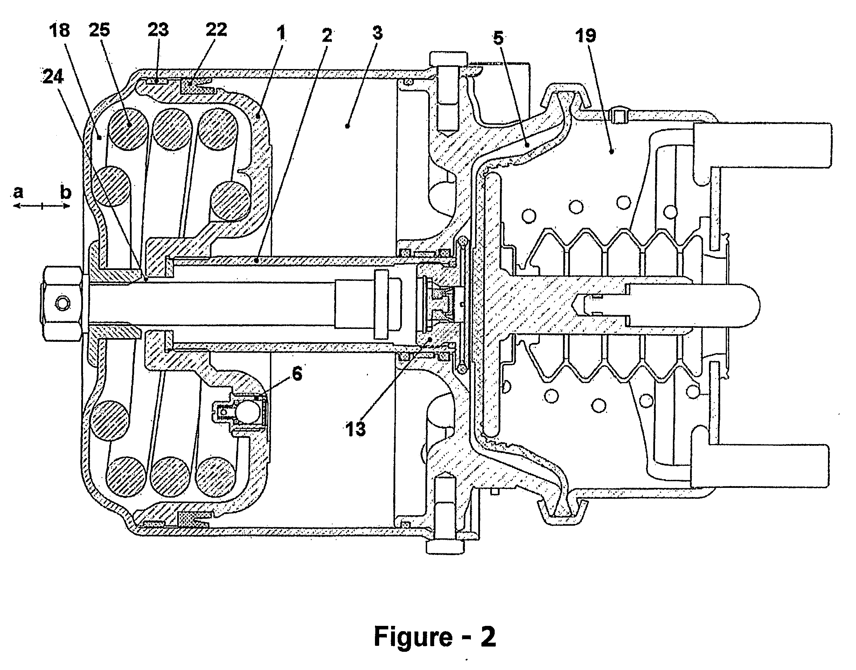

- Figure 2 -: Cross sectional view of the diaphragm - piston spring brake actuator having the internal ventilation system that has been the subject for the Patent Application No. TR 2002 00761 and PCT Application No. WO 03/080417 A1

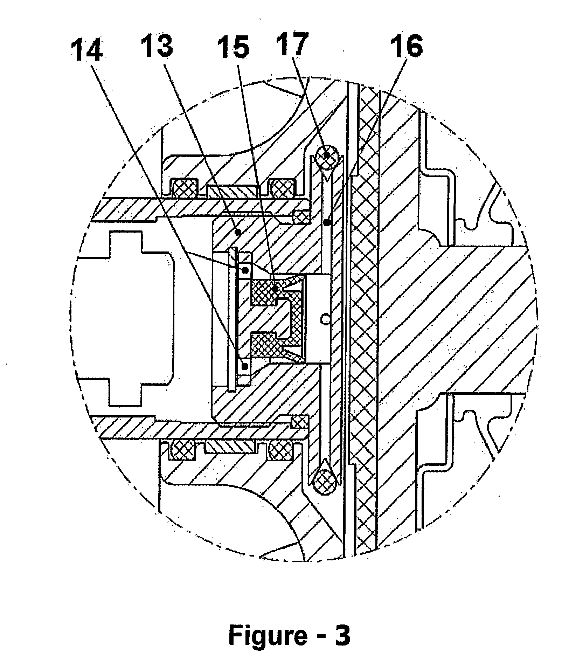

- Figure 3 -: Cross sectional view of the plug within the internal ventilation system that has been the subject for the Patent Application No. TR 2002 00761 and PCT Application No. WO 03/080417 A1

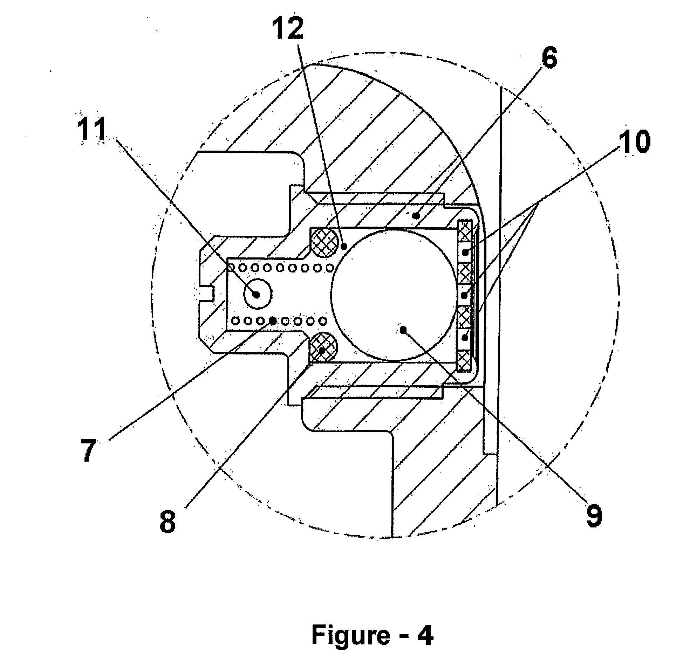

- Figure 4 -: Cross sectional view of the valve piece within the internal ventilation system that has been the subject for the Patent Application No. TR 2002 00761 and PCT Application No. WO 03/080417 A1

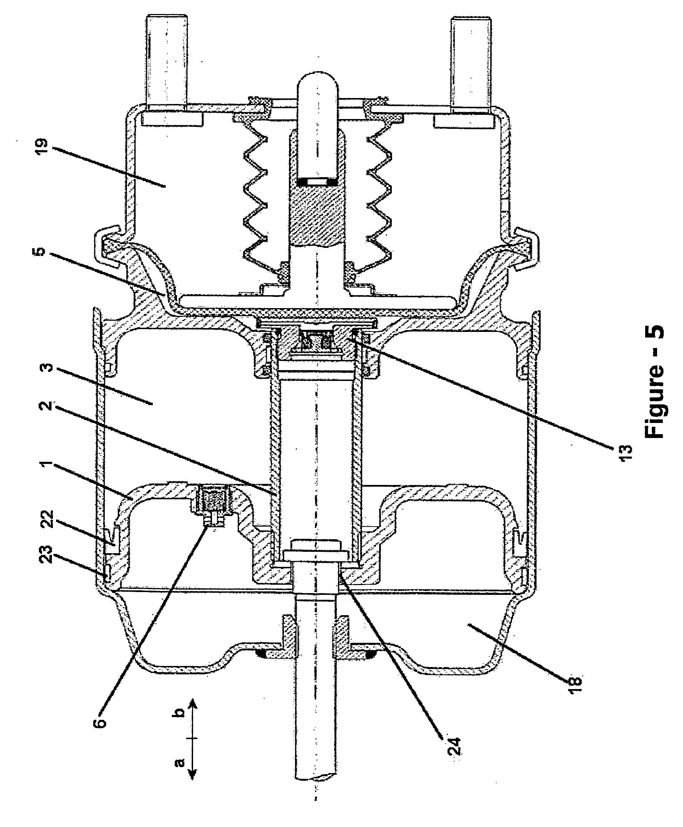

- Figure 5 -: Cross sectional view of the diaphragm - piston spring brake actuator having the internal ventilation system and being the subject of this invention

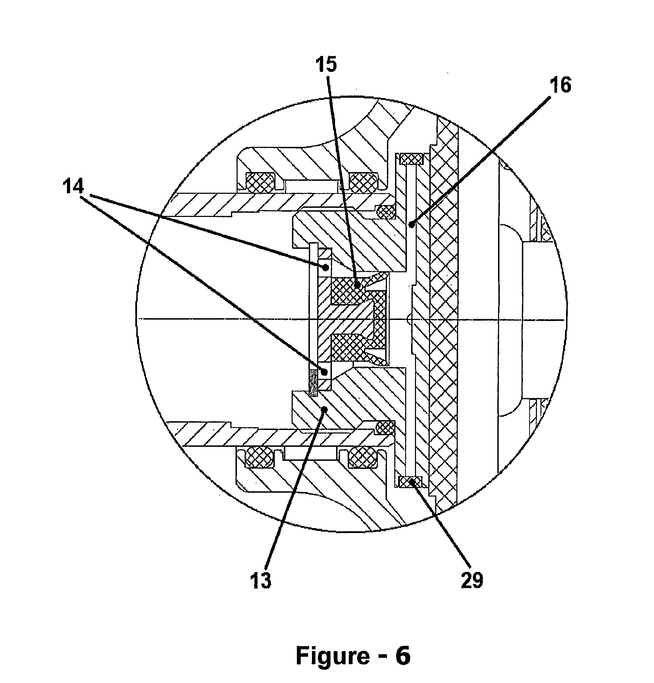

- Figure 6 -: Cross sectional view of the plug within the ventilation system that is the subject of this invention

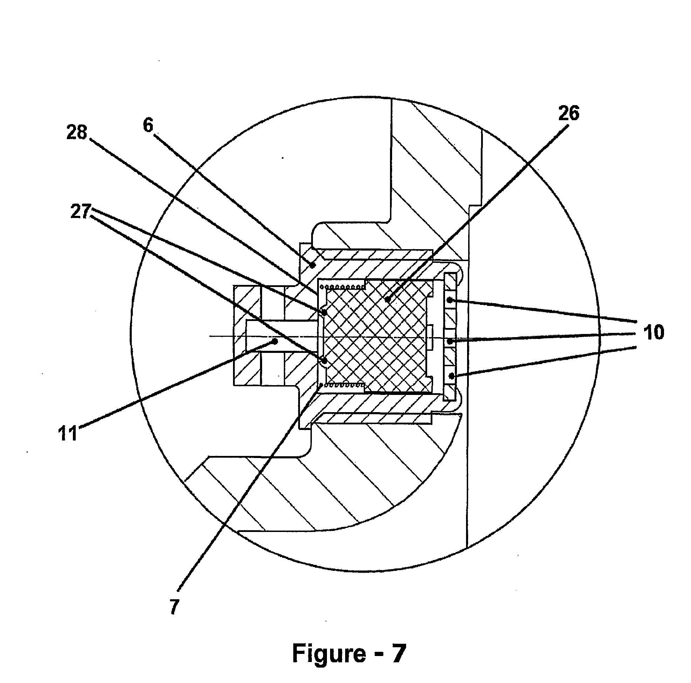

- Figure 7 -: Cross sectional view of the valve piece within the internal ventilation system that is the subject of this invention.

### BRIEF DESCRIPTION OF THE INVENTION

This invention is related to the internal ventilation system that is used in the diaphragm - piston spring brake actuators. Thanks to the said system, the factors such as dust, dirt, stone and moisture are avoided to enter into the back part of the piston in order not to affect the operation of the actuator.

In general, the system comprised two valves which are balancing the vacuum and excessive pressure at the back part of the piston. One of these valves is installed on the piston; and the other is integrated into the plug. The function of the valve placed on the piston is to ensure the balance of the vacuum pressure; and of the valve integrated into the plug is to balance the excessive pressure. This designed system allows the park chamber being affected by the environmental conditions at the lowest level.

An internal ventilation system developed for the diaphragm - piston spring brake actuators produced by our firm is also disclosed in the Patent Application No. TR 2002 00761 U and PCT Application No. WO 03/080417 A1. The internal ventilation system the references of which are mentioned below and the system that is the subject of the invention principally operate on the basis of the same logic. The internal ventilation system that is the subject of this invention has been transformed into a more sound and reliable structure.

### DESCRIPTION OF THE PARTS-SECTIONS- OF THE INVENTION

The description of the parts- sections- components which are covered in the figures that are prepared in order to better explain the diaphragm - piston spring brake actuator, which has been developed with this invention, are separately numbered and given below. The definition of each part corresponding to these numbers is provided below.
1. Aluminum Piston
2. Aluminum Pipe
3. Park Chamber
4. Breather Tube (External Ventilation Tube)
5. Service Chamber
6. Piston Valve
7. Spring
8. O-Ring
9. Ball
10. Outlet air openings
11. Inlet air openings
12. Air transition space
13. Internal ventilation plug
14. Air inlet holes
15. Pneumatic sealing (Nutring)
16. Air outlet channels
17. O-Ring
18. Back part of the piston
19. Atmospheric area
20. Rubber elbow
21. Rubber elbow
22. Sealing member
23. Sliding and bearing ring
24. Air transition aperture
25. Emergency Spring
26. Piston
27. Sealing lip
28. Piston Valve Sealing Surface
29. Square or rectangular sectional sealing ring

### DETAILED DESCRIPTION OF THE INVENTION

The back part of the piston (18) is totally isolated from the atmosphere by using the internal ventilation system; and therefore the penetrating of contaminants to the actuator is prevented in the internally ventilated diaphragm-piston spring brake actuator that is developed through this invention. Therefore, the probability of these contaminants to breakdown the actuator is eliminated.

The Internally ventilated diaphragm-piston spring brake actuator, which is developed through this invention, is basically comprised by an aluminum piston (1), an aluminum pipe (2), a park chamber (3), a service chamber (5), a piston valve (6), located within the aluminum piston (1) and comprising a piston valve spring (7), a piston (26), sealing lips of the piston (27), sealing surface of piston valve (28), inlet air openings (11) and an air transition space (12), the piston spring brake actuator further comprising a plug (13), air inlet holes (14), a pneumatic sealing (15) and outlet channels (16), square or rectangle sectional seating member (29).

Different from the designs in the Patent Application No. TR 2002 00761 U and PCT Application No. WO 03/080417 A1 which are related to the internal breather plug, steel ball (9) and o-ring (8) are not present in piston valve (6) in this invention. Instead of these two parts (8, 9) a single component called piston (26) is designed, which also undertakes the sealing function. As shown in Figure 5, just like o-ring (8) the piston (26) also has a sealing lip (27). As soon as the compressed air begin to fill the park chamber (3), the piston (26) overcomes the spring (7) force and yet, its lip is (27) seated on the sealing surface of piston valve (28). Hence, sealing is maintained.

On the other hand, another variety is in the plug (13) section. Other than the designs In the TR 2002 00761 U numbered patent application and the WO 03/080417 A1 numbered PCT application, in this invention; in order to prevent air flow from the service chamber (5) to the park chamber (3), square or rectangle sectional sealing components (29) are used instead of o-ring (17). The o-ring (17) that is used in the prior designs is able to maintain the said sealing; still they cover the outlet channels (16) with a small surface area. Consequently, in order to increase security factors of the design that is the subject of the invention, square or rectangular sectioned sealing member (29) having larger surface area is used instead of o-ring (17).

In the following description of the invention, aluminum piston (1) and connected aluminum pipe (2) can move as beared in hollows. This system will be hereinafter called as piston briefly.

By the influx of the air into the park chamber (3), the park chamber (3) starts to be filled with the compressed air received from the air tanks of the vehicle. In this case, the piston (26) within the piston valve (6) compress the spring (7) by the effect of the pressure air; and its lips (27) seats on the sealing surface (28) of the piston valve. Hence, it is ensured that the piston valve (6) is dosed and the sealing is maintained. The piston (1) moves in direction (a) due to the pressure created In the park chamber (3); and results in the compress of the air at the back part (18) of the piston. Compressed air passes through the air transition aperture (24); and reaches to the plug (13). The air enters into the plug (13) through the inlet holes (14); and arrives at the outlet channel (16) by opening the pneumatic sealing (15). Compressed air opens the square or rectangular sectioned sealing ring (29) and releases into the service chamber (5). Meanwhile, as the service chamber (5) is open to the atmosphere through the valves which differ from system to system, the compressed air is also released to the atmosphere.

As the air in the park chamber (3) is released by the shifting of the vehicle into the parking condition, the piston (1) moves in direction (b) by the force of the emergency spring (25); and results in the formation of the partial vacuum at the back part (18) of the piston. The said vacuum is opened to the atmosphere by means of the piston valve (6). In other words, the pressure that is effective on the piston (26) decreases down to the atmospheric pressure rapidly by the release of the air in the park chamber (3). Simultaneously, the piston (26) is moved by the force that created by the compressed spring (7) and piston lip (27) removels from the sealing surface (28) of the piston valve. The air absorbed through the air transition space (12) that is formed thereafter ensures the back part (18) of the piston to achieve the atmospheric pressure.

The internally ventilated diaphragm - piston spring brake actuator that is developed by this invention has avoided the leakage of the dirt, dust, water and corrosives which penetrates into the back part (18) of the piston through the openings caused by dislocation and rupture of the breather tube (4) because of several reasons and by the rubber elbows (20, 21); are absorbed inside by the movement of the piston (1) in direction (b) into the actuator. So, the emergency spring (25) will be prevented from corrosion and oxidation. By the way, sealing members (22) and bearing ring (23) will be avoided of losing their functionality.

## Claims

1. Internally ventilated diaphragm - piston spring brake actuator that is comprised by an aluminum piston (1), an aluminum pipe (2), a park chamber (3), a service chamber (5), a piston valve (6) located within the aluminum piston (1) and comprising a piston valve spring (7), inlet air openings (11) and an air transition space (12), the piston spring brake actuator further comprising a plug (13), air inlet holes (14), a pneumatic sealing (15), and outlet channels (16) **characterized in that** the piston valve (6) comprises a piston (26) provided with a sealing lip (27), cooperating with a sealing surface (28) and **in that** a square or rectangular sectioned sealing member (29) for the outlet channels (16) is provided.

2. Internally ventilated diaphragm - piston spring brake actuator according to the preceding claim, **characterized in that** in use in a vehicle, while the park chamber (3) is filled with pressurized air from the air tanks of vehicle by the influx of the air into the park chamber (3) in order to ensure the sealing, the piston (26) within the piston valve (6) compresses the spring (7) by the effect of the pressurized air and its lip (27) seats on the sealing surface (28) of the piston valve (6) and the piston valve (6) is closed at the same time.

3. Internally ventilated diaphragm - piston spring brake actuator according to any of the preceding claims, **characterized in that** in use in a vehicle, as the air in the park chamber (3) is removed by the shifting of the vehicle into the parking condition, the aluminum piston (1) moves in direction (b) as depicted in figure 2 by the force of an emergency spring (25); and this movement causes partial vacuum at the back part (18) of the piston; and the mentioned vacuum is opened to the atmosphere by means of the piston valve (6).

4. Internally ventilated diaphragm - piston spring brake actuator according to any of the preceding claims, **characterized in that** in use in a vehicle, the effective pressure applied on the piston (26) decreased down to the atmospheric pressure rapidly by the release of the air in the park chamber (3) and simultaneously, the piston (26) is moved by the force created by the compressed spring (7) and the lip (27) removes from the sealing surface (28) of the piston valve (6) located within the aluminum piston (1) and the air absorbed through the air transition space (12) that is formed thereafter ensures the back part (18) of the piston to reach the atmospheric pressure.

## Patentansprüche

1. Innen belüftete Membran - Kolbenfederspeicherbremszylinder, der einen Aluminium-Kolben (1), ein Aluminium-Rohr (2), eine Parkkammer (3), eine Servicekammer (5), ein Kolbenventil (6) beinhaltet, der sich innerhalb dem Aluminium-Kolben (1) befindet und eine Kolbenventilfeder (7), Lufteinlassöffnungen (11) und einen Luftübergangsraum (12) beinhaltet, der Kolbenfederspeicherbremszylinder weiter beinhaltend einen Stecker (13), Lufteinlassöffnungen (14), eine pneumatische Dichtung (15), und Auslasskanäle (16), **dadurch gekennzeichnet, dass** der Kolbenventil (6) einen Kolben (26) mit einer Dichtlippe (27) zusammenwirkend mit einer Dichtfläche (28) und dass ein im Schnitt quadratisches oder rechteckiges Dichtungselement (29) für die Auslasskanäle (16) vorgesehen ist.

2. Innen belüftete Membran - Kolbenfederspeicherbremszylinder nach dem vorhergehenden Anspruch, **dadurch gekennzeichnet, dass** im Einsatz in einem Fahrzeug, während die Parkkammer (3) mit Druckluft aus den Lufttanks des Fahrzeugs durch den Zustrom der Luft zur Parkkammer (3) gefüllt wird, um die Abdichtung zu gewährleisten, komprimiert der Kolben (26) innerhalb dem Kolbenventil (6) die Feder (7) durch die Wirkung der Druckluft und seine Lippe (27) sitzt auf der Dichtfläche (28) des Kolbenventils (6) und der Kolbenventil (6) ist zur gleichen Zeit geschlossen.

3. Innen belüftete Membran - Kolbenfederspeicherbremszylinder nach einem der vorhergehenden Ansprüche, **dadurch gekennzeichnet, dass** im Einsatz in einem Fahrzeug, während die Luft in der Parkkammer (3) durch die Verschiebung des Fahrzeugs in den Parkzustand entfernt wird, der Aluminium-Kolben (1) bewegt sich in Richtung (b) wie in Abbildung 2 dargestellt durch die Kraft einer Notfeder (25); und diese Bewegung verursacht Unterdruck im hinteren Teil (18) des Kolbens; und der genannte Unterdruck ist durch den Kolbenschieber (6) zur Atmosphäre geöffnet.

4. Innen belüftete Membran - Kolbenfederspeicherbremszylinder nach einem der vorhergehenden Ansprüche, **dadurch gekennzeichnet, dass** im Einsatz in einem Fahrzeug, der effektive, auf den Kolben (26) angewendete Druck wird durch die Freigabe der Luft in der Parkkammer (3) schnell auf den atmosphärischen Druck verringert, und gleichzeitig wird der Kolben (26) durch die Kraft der zusammengedrückten Feder (7) bewegt, und die Lippe (27) wird von der Dichtfläche (28) des Kolbenventils (6), der sich im Aluminium-Kolben (1) befindet, entfernt, und die Luft absorbiert durch die Luftübergangsraum (12), die danach gebildet wird, sorgt, dass der hintere Teil (18) des Kolbens den atmosphärischen Druck erreicht.

## Revendications

1. Membrane interne ventilé - actionneur de frein piston à ressort comprenant un piston en aluminium (1), du tube aluminium (2), une chambre de parc (3), une chambre de service (5), une soupape à piston (6) située dans le piston en aluminium (1) comprenant un piston et de ressort de soupape (7), les ouvertures d'admission d'air (11) et la transition vers l'espace aérien (12), le piston du vérin de frein à ressort comprenant en outre un bouchon (13), les trous d'entrée d'air (14), un pneumatique d'étanchéité (15), et les canaux de sortie (16) **caractérisé en ce que** la valve du piston (6) comprend un piston (26) munie d'une lèvre d'étanchéité (27), coopérant avec une surface d'étanchéité (28) et une que carrée ou rectangulaire organe d'étanchéité sectionnées (29) pour les canaux de sortie (16) est fourni.

2. Membrane interne ventilé - actionneur de frein à pistons ressort selon la revendication précédente, **caractérisé en ce que** dans une utilisation dans un véhicule, tandis que la chambre de parc (3) est rempli d'air sous pression à partir des réservoirs d'air du véhicule par l'afflux de l'air dans la chambre de parc (3) afin d'assurer l'étanchéité, le piston (26) au sein de la valve du piston (6) comprime le ressort (7) par l'effet de l'air pressurisé et sa lèvre (27) sièges sur la surface d'étanchéité (28) de la valve du piston (6) et la valve du piston (6) est fermée dans le même temps.

3. Membrane interne ventilé - actionneur de frein piston à ressort selon l'une des revendications précédentes, **caractérisé en ce que** dans une utilisation dans un véhicule, comme l'air dans la chambre de parc (3) est éliminé par le déplacement du véhicule dans l'état de parking, le piston en aluminium (1) se déplace dans le sens (b) comme illustré dans la figure 2 par la force d'un ressort d'urgence (25), et ce mouvement provoque un vide partiel à la partie arrière (18) du piston, et le vide mentionné est ouvert à l'atmosphère par l'intermédiaire de la soupape de piston (6).

4. Membrane interne ventilé - actionneur de frein piston à ressort selon l'une des revendications précédentes, **caractérisé en ce que** dans une utilisation dans un véhicule, la pression effective appliquée sur le piston (26) a diminué à la pression atmosphérique rapidement par la libération de l'air dans le chambre de parc (3) et, simultanément, le piston (26) est déplacé par la force créée par le ressort comprimé (7) et la lèvre (27) élimine de la surface d'étanchéité (28) de la valve du piston (6) située l'intérieur du piston en aluminium (1) l'air et absorbé par le passage de l'espace aérien (12) qui est formée par la suite assure la partie arrière (18) du piston pour atteindre la pression atmosphérique.
